(19) Europäisches Patentamt
European Patent Office
Office européen des brevets

(11) Publication number: **0 276 677 B1**

# EUROPEAN PATENT SPECIFICATION

(45) Date of publication of patent specification: **13.11.91**     (51) Int. Cl.⁵: **B60R 1/06**

(21) Application number: **88100289.3**

(22) Date of filing: **12.01.88**

(54) Holding device of a mirror element for a rearview mirror.

(30) Priority: **13.01.87 JP 2359/87**
**28.12.87 JP 197400/87**

(43) Date of publication of application:
**03.08.88 Bulletin 88/31**

(45) Publication of the grant of the patent:
**13.11.91 Bulletin 91/46**

(84) Designated Contracting States:
**DE FR GB**

(56) References cited:
**EP-A- 0 115 448**
**DE-A- 3 144 547**
**DE-A- 3 330 174**
**FR-A- 2 347 231**
**US-A- 4 506 954**

(73) Proprietor: **MURAKAMI KAIMEIDO CO., LTD**
**12-25, Miyamoto-cho Shizuoka-shi**
**Shizuoka 422(JP)**

(72) Inventor: **Kikuchi, Toshiaki**
**1-16 Kitayabe-cho 2-chome**
**Shiumizu-shi Shizuoka-ken 424(JP)**
Inventor: **Mochizuki, Toshihiro**
**13-3, Asahigaoka**
**Fujieda-shi Shizuoka-ken 426(JP)**
Inventor: **Ito, Yasutoshi**
**1-17, Midori-cho**
**Shizuoka-shi Shizuoka-ken 420(JP)**
Inventor: **Yamana, Tohru,**
**1214-7 Takizawa,**
**Shizuoka-ken, 426-01,(JP)**

(74) Representative: **Riederer Freiherr von Paar zu**
**Schönau, Anton et al**
**Van der Werth, Lederer & Riederer Freyung**
**615 Postfach 2664**
**W-8300 Landshut(DE)**

**Description**

FIELD OF THE INVENTION

This invention relates to a rearview mirror for a motor vehicle of the type for automatically adjusting the tilting angle of the mirror by means of a remote controlled electric motor-drive. Particularlay, the invention relates to a structure for holding a mirror element in the rearview mirror as specified in the preamble of claim 1 and for example as disclosed in DE-A-3 330 174.

DESCRIPTION OF THE PRIOR ART

A rearview mirror mounted outside a motor vehicle for adjusting the angle of reflection of the mirror from the interior of a compartment has been known. An electric motor-driven remote control type actuator unit fixed to a mirror body has two electric motors for adjusting the angle of reflection of the mirror at both vertical and horizontal angles, and a drive transmission. Supporting means for tiltably supporting a mirror element is provided at the center in the rear housing of the actuator unit. The supporting means has movable pivots at positions disposed at a predetermined distance in directions crossing at a right angle from the center which is at the supporting means. When one or both of the electric motors is driven, either one or both of the movable pivots is axially moved back or forth through the drive transmission to tilt the mirror element about the supporting means as a center.

An ordinary supporting means has a semispherical socket formed in the rear housing, and a spherical pivot projected on the back surface of a mirror holder and engaged with the spherical socket. This supporting means does not have sufficient pivot holding force, and a chatter occurs at the mirror surface while the vehicle is traveling. It is considered to increase the diameters of the pivot and the socket to strengthen the holding force so as to prevent the chatter from occurring at the mirror, but the distance between the actuator and the mirror element is lengthened to be unstable, and the mirror body is unnecessarily increased unpreferably in size.

Then, a system having a spherical segment-shaped pivot provided on the back surface of a mirror holder and engaged with a socket including a zone-of-sphere-shaped recess formed in the rear housing of an actuator unit has been proposed as disclosed in Japanese Utility Model Publication No.60-37857/1985. The mirror supporting means has larger diameters than those of the conventional spherical pivot and the recess spherical socket, low height of the spherical segment so that the distance between the actuator unit and the mirror element is not so increased. The system is advantageous in that the recess is formed at the center of the spherical segment-shaped pivot, a spherical segment-shaped cap is engaged with the recess, a tapping screw is penetrated through a helical spring with the recess, clamped to the center of the socket having the zone-of-sphere-shaped recess, and the mirror element can be supported with desired engaging torque by controlling the clamping force. However, in this system, a threaded cylinder is integrally formed at the center of the zone-of-sphere-shaped recess of the rear housing and the threaded cylinder is not engaged with a front housing. Therefore, its rigidity is less, and this system does not have a structure for preventing a chatter from occurring at a mirror. Since a screw must be penetrated through the center of the spherical segment--shaped pivot from the surface of the mirror holder before mounting a mirror glass, clamped to the socket of the rear housing side to be associated, and the mirror glass must be then bonded to the surface of the mirror holder, associating procedure becomes complicated.

The inventors have disclosed a rearview mirror having the following supporting structure in Japanese Utility Model Publication No. 60-40357/1985. More specifically, a mirror plate is bonded to a mirror holder at the center of which is formed with a punched hole to construct a mirror element, and a holder plate which can be engaged with the punched hole of the mirror holder is prepared as another component. This holder plate has a center socket at its center, and small sockets for engaging movable pivots in a direction perpendicular to each other at the center socket as a center. The center pivot and the movable pivots of an electric motor-driven remote control unit side are respectively engaged with the center socket and the small sockets of the holder plate. Thus, after the holder plate is supported to the electric motor-driven remote control unit, the mirror element is approached to the holder plate, and the holder plate is engaged with the punched hole formed at the mirror holder to associate the entire mirror. Since this mirror employs a pivot and socket supporting type, the holder plate does not have sufficient pivot holding force, and since the holder plate is merely engaged with the undercut formed at the periphery and the punched hole of the mirror holder, the engaged portion is easily disengaged due to a vibration or an impact while" the vehicle is traveling to cause the mirror element to be possibly removed.

SUMMARY OF THE INVENTION

It is therefore an object of this invention to provide a holding device of a mirror element for a rearview mirror which can remarkably simplify the adjustment of a holding force.

It is another object of this invention to provide a holding device of a mirror element for a rear view mirror which can be readily associated.

It is still another object of this invention to provide a holding device of a mirror element for a rearview mirror having sufficient mirror element holding strength.

It is still another object of the invention to provide a holding device of a mirror element for a rearview mirror in which the rigidity of an actuator housing of the mirror element supporting portion is enhanced to prevent the mirror element from vibrating.

In order to achieve the objects of the invention and to overcome the problems of the prior art, the holding device of a mirror element for rearview mirror of the invention is characterised by the features of the second part of claim 1. It includes an actuator unit for adjusting the inclining angle of a mirror, a mirror element including a mirror plate and a mirror holder for supporting the mirror element, a pivot plate removably engaged with the back surface of the mirror holder, and supporting means for supporting the pivot plate to the actuator unit with a predetermined engaging torque. The upper portion of the mirror element has hook type latch means for engaging the pivot plate, and the lower portion of the mirror element has pawl engaging means.

The supporting means has a zone-of-sphere-shaped central socket formed at the front housing of the actuator unit, a threaded cylinder protruded to the center of the socket, a spherical segment-shaped pivot formed at the mirror element side to engage with the central socket, a spherical recess surface formed at the center of the spherical segment-shaped pivot, and a tapping screw penetrated through a helical spring to the threaded cylinder. A relatively large aperture is formed at the center of the mirror holder at the mirror element, and a pivot plate with the spherical segment-shaped pivot can be detachably engaged with the aperture. The surface of the mirror holder is firmly secured with the mirror glass. When assembling the rearview mirror, an intermediate assembly in which a desired engaging torque is adjusted by adjusting the clamping of the tapping screw while associating in advance the pivot plate with the actuator unit is constructed. The intermediate assembly thus adjusted is mounted directly on the mirror body or in a frame in the mirror body, the mirror element is approached to the pivot plate of the actuator side, the aperture of the mirror holder is engaged with the pivot plate by the hook type engaging means at the upper portion of the mirror element, and the pawl engaging means of the lower portion of the mirror element is simultaneously engaged. After thus engaging, when the mirror plate might be damaged or scratched during use, only the mirror element is removed, a mirror element of the same type prepared separately is mounted on the pivot plate as described above to recover the rearview mirror similarly a new one.

The actuator unit is formed by engaging the front housing and the rear housing as described above. The threaded cylinder of the supporting means is formed on the upper surface of the cylinder of a height reaching from the inner wall of the front housing to the inner wall of the rear housing, and protruded at the center of the zone-of-sphere-shaped socket. The spherical segment-shaped pivot of the pivot plate side is engaged with the zone-of-sphere-shaped socket, the cap is engaged within the spherical segment-shaped pivot, and the tapping screw is penetrated to the center of the threaded cylinder through the helical spring and clamped. A desired engaging torque is provided by adjusting the clamping force to provide sufficient mirror holding strength. The threaded cylinder is formed at the center of the upper surface of the cylinder projected integrally from the inner wall of the front housing, and the shoulder formed at the cylindrical upper edge of the root of the threaded cylinder is contacted with the inner wall of the rear housing. Thus, the front housing and the rear housing are closely contacted at the mirror element supporting portion by clamping the screw to maintain a high rigidity.

BRIEF DESCRIPTION OF THE DRAWINGS

A preferred embodiment of the invention is set forth in the following description and shown in the drawings and is particularly and distinctly pointed out and set forth in the appended claims.

Fig. 1 is a sectional view of a rearview mirror according to a preferred embodiment of the present invention;

Fig. 2 is an enlarged sectional view of a mirror element holding means;

Fig. 3 is an exploded assembling view of the similar holding device;

Fig. 4 is a back side view of the mirror element;

Fig. 5 is a one side view of a pivot plate of the invention;

Fig. 6 is the other side view of the pivot plate;

Fig. 7 is a side view of the state that the mirror element is engaged with the pivot plate;

Fig. 8 is an enlarged sectional view of latch means of the invention;

Fig. 9 is a enlarged sectional view of pawl engaging means in operation;

Fig. 10 is a sectional view of the state that the pawl engaging means is completely engaged; and

Fig. 11 is a partial perspective view of a pawl engaging portion when separating.

DESCRIPTION OF THE PREFERRED EMBODIMENTS

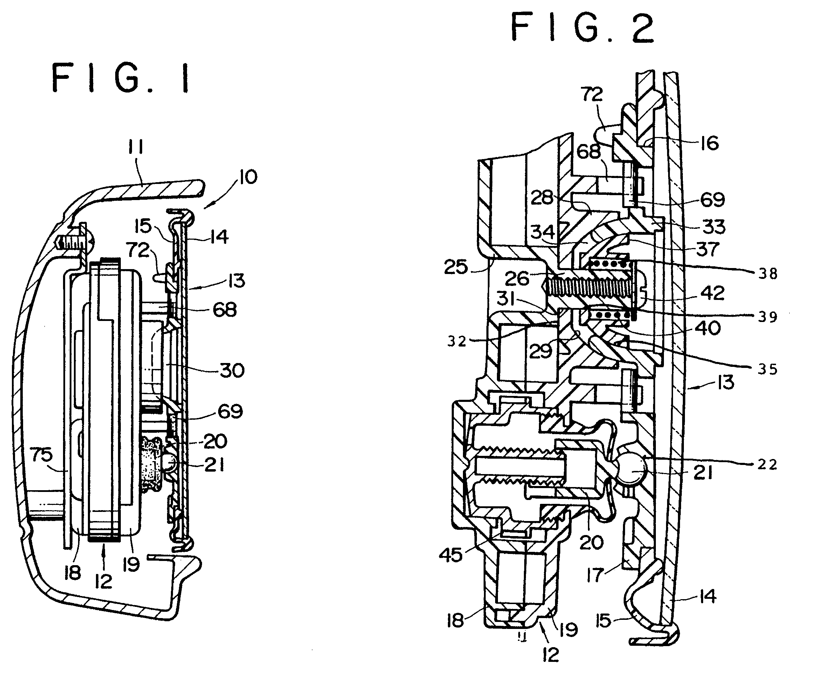

A remote controlled electric motor operated mirror assembly 10 embodying the present invention is shown in Fig. 1.

The assembly 10 includes a mirror body 11 rotatably mounted on a base, an actuator unit 12 set in said mirror body 11, and a mirror element 13 mounted adjustably at a tilting angle in front of the actuator unit 12. Said mirror element 13 has a mirror plate 14 and a mirror holder 15 for holding the mirror plate 14. A pivot plate 17 is tiltably mounted through supporting means at the rear side of the actuator unit 12, and an aperature 16 is opened at the center of the mirror holder 15, where the pivot plate 17 is detachably mounted.

The actuator unit 12 is constructed, as shown in Fig. 2, to separably engage a front housing 18 and a rear housing 19, and has therein two sets each comprising an electric motor, a worm for forming a drive transmission, and a worm wheel 45. At the center of the rear housing 19 is provided a double socket-type supporting means 30 to be described later to tiltably support the mirror element 14.

The worm wheels 45 of the drive transmission are disposed in the housing at positions separated at an angular distance of a right angle with the supporting means 30 as the center. An adjusting nut 20 is attached to each worm wheel 45, and a pivot 21 provided at the end of the adjusting nut 20 is engaged with a spherical seat 22 formed on the back surface of the pivot plate 17. When any of the electric motors is normally or reversely rotated, the adjusting nut 20 moves back and forth through the drive transmission, and the angle of reflection of the mirror is adjusted at vertical of horizontal angle.

The supporting means 30 includes, as disclosed in Japanese Utility Model Application No. 180488/1986, a threaded cylinder 26 portuded longer than the thickness of the housing from the front housing 18, and a double ball and socket structure formed around the periphery of the threaded cylinder.

As shown in Fig. 2, a cylinder 25 has a heighht so as to arrive from the front housing 18 for forming the actuator unit 12 at the inner surface of the rear housing 19, and the threaded cylinder 26 is penetrated via a through-hole 31 of a bearing seat 28 formed on the rear housing 19 around the center of the cylinder 25. The bearing seat 28 has a recess spherical surface 29 for forming a zone-of-sphere-shaped recess for receiving a hollow pivot 33 from the side of the pivot plate 17, and the front surface - as seen in the driving direction of the vehicle - of the bearing seat 28 is contacted with a shoulder 32 of the cylinder 25 from which the threaded cylinder 25 penetrating the through-hole 31 from the center of the recess spherical surface 29 backward protrudes. The hollow spherical segment-shaped pivot 33 having a through-hole 34 at the front side and a recess spherical surface 35 toward the back side is formed at the center of the pivot plate 17.

A spherical segment-shaped cap 37 is engaged with the recess spherical surface 35 of the pivot 33. This cap 37 includes a hollow portion 38 for containing a helical spring 40 and a through-hole 39 for inserting a tapping screw 42 at the bottom of the hollow portion 38, and the pivot 33 is fixed to the threaded cylinder 26 protruded from the side of the mirror holder by the helical spring 40 and the tapping screw 42 with a washer in the hollow portion 38.

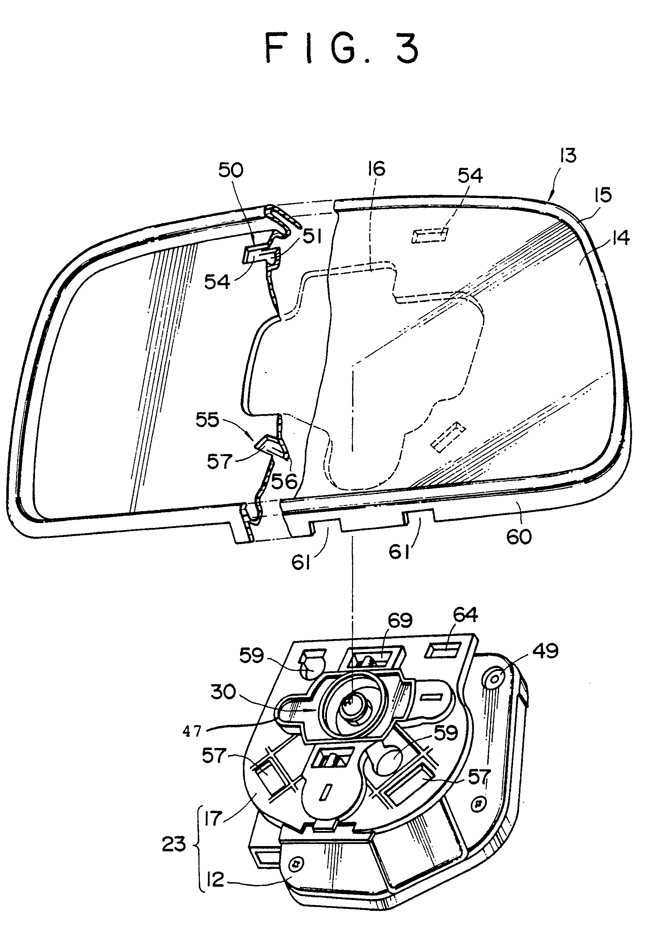

Fig. 3 is an exploded perspective view of the mirror element 13 and a subassembly 23. The mirror element 13 has the mirror element 14 engaged with or bonded to the mirror holder 15 having the aperature 16 at the center described above. The subassembly 23 has the pivot plate 17 tiltably mounted on the actuator unit 12 through the supporting means 30.

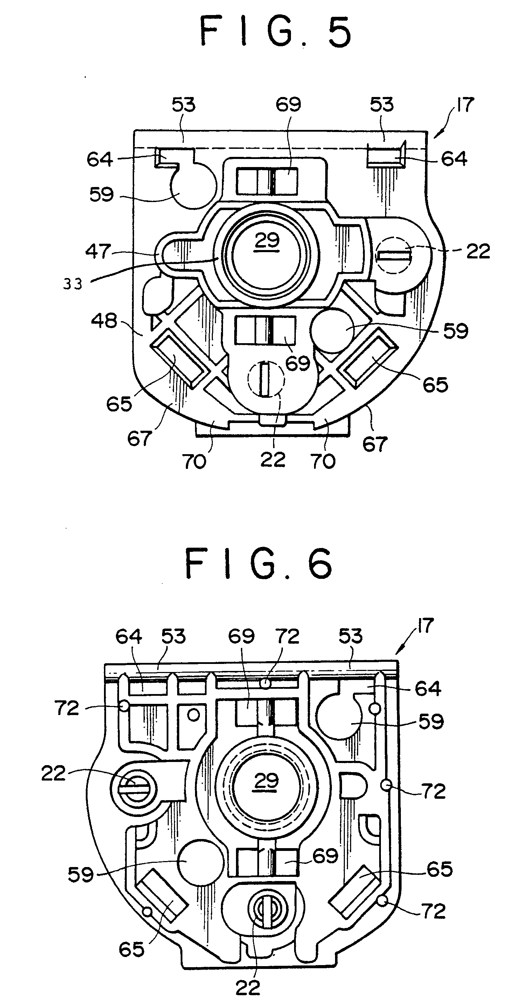

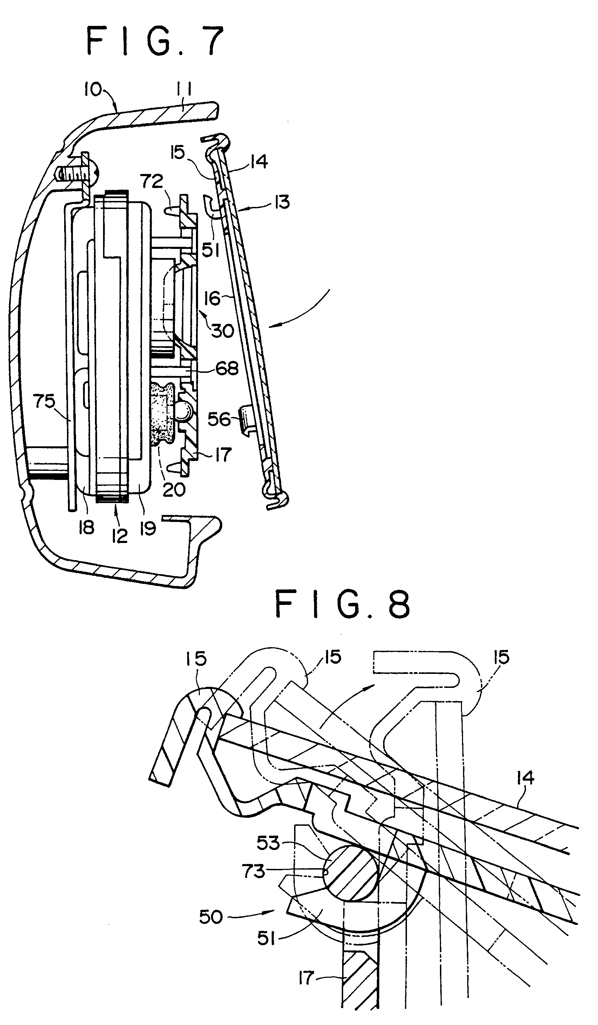

In order to mount the mirror element 13 on the pivot plate 17 of the subassebly 23 which is secured to a base plate 75 of the mirror body 11 (Fig. 1), a thick portion 47 of the pivot plate 17 is engaged with the aperture 16 of the mirror holder side by utilizing hook type latch means 50 (Fig. 8) and pawl engaging means 55 provided between the mirror holder 15 and the pivot plate 17, a peripheral edge thin portion 48 (Fig. 5) is closely contacted with the back surface of the mirror holder 15, and assembled.

In order to secure the subassembly 23 to the base plate 75, the actuator unit 12 has a plurality of screw penetrating holes 49 as shown in Fig. 3. Three screw penetrating holes 49 are ordinarily used. In Fig. 3, only one screw penetrating hole 49 is illustrated, but the remaining two screw penetrating holes 49 are opened at the portions directly under openings 59, 59 formed at the pivot plate 17 in the thicknesswise direction of the actuator unit 12 (Fig. 5, 6).

The hook type latch means 50 has a hook 51 formed at the upper portion on the back surface of the mirror holder 15, and a cylindrical supporting rod portion 53 formed at the pivot plate 17. The pawl engaging means 55 has a pawl 56 protruded from the lower portion of the back surface of the mirror holder 15, and a rectangular opening 57 formed at the pivot plate 17. In Fig. 3, reference numerals 60 designates a skirt formed around the peripheral edge of the mirror holder, and numeral 61 designates tool inserting cutouts for separating the mirror element 13 from the mirror assembly 23 as will be described later.

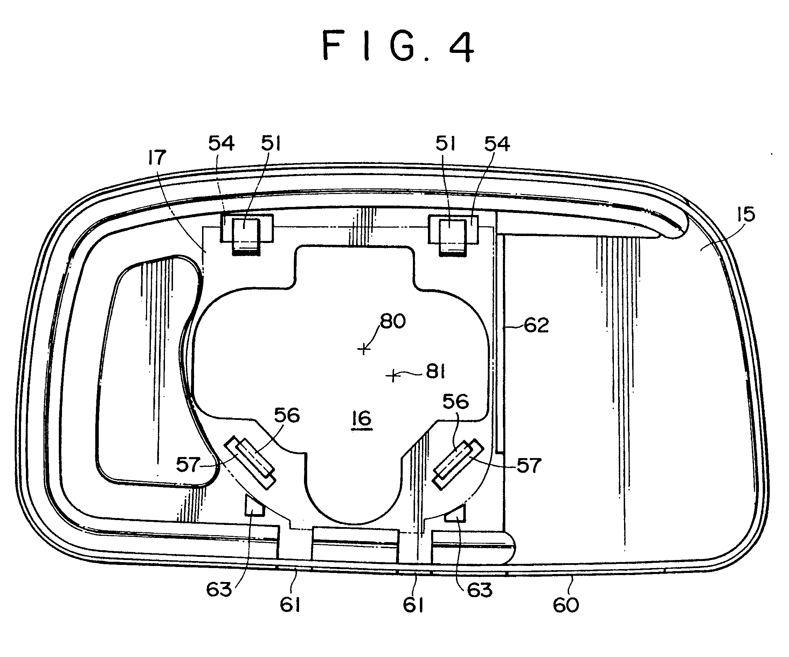

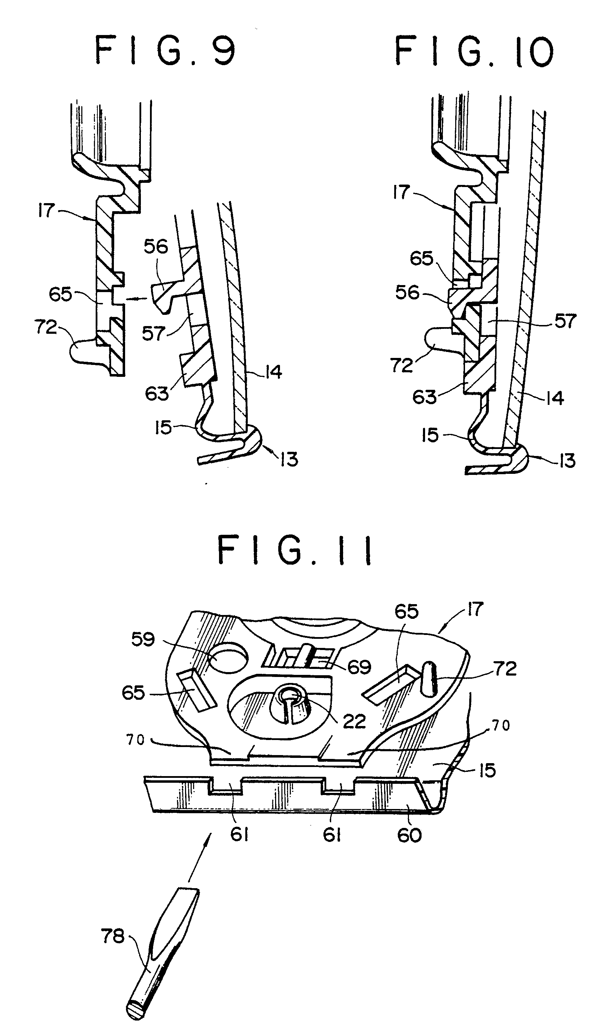

Fig. 4 shows the back side surface of the mirror holder 15. The aperture 16 of substantially thick cross shape is opened at the center of the back surface of the mirror holder 15 to engage the thick portion 47 of the pivot plate 17. A pair of rectangular openings 54 are formed at the upper portion of the back surface of the mirror holder 15, and the hooks 51, 51 as shown in Fig. 8 are formed at the front side referring to the vehicle movement direction of the mirror holder 15. The pair of narrow rectangular openings 57, 57 having an inclination of approx. 45° with respect to the center line are formed correspondingly at lower positions, and the pawls 56, 56 are undercut as shown in Fig. 9 and are protruded from the upper sides of the openings 57, 57, respectively. A positioning projecting strip 62 is formed longitudinally near the right hook 51 and pawl 56 for guiding the right end face of the pivot plate 17, and projections 63, 63 are formed below the openings 57, 57 as shown in Fig. 9 and 10, for guiding lower bent portions 67, 67 (Fig. 5) of the pivot plate 17. In Fig. 4, reference numerals 80 designates the center of pivot, and numeral 81 designates the center of the mirror.

Fig. 5 is a front view of the pivot plate 17, as seen from the back of the vehicle, and Fig. 6 shows the back surface of the pivot plate 17 as seen from the direction from the front side of the vehicle. The upper and left sides of the pivot plate 17, as seen in Fig. 5, are formed perpendicularly to each other, and the remaining portion except a linear part of the lower side is formed substantially in a circular-arc shape. The hollow spherical segment-shaped pivot 33 is formed at the center of the plate 17 as described above, and formed at the periphery of the pivot 33 with the thick portion 47 projected in a deformed cross shape. Anti-rotation retainers 69, 69 of the shape that a rod is disposed at the center of a rectangular opening are formed at upper and lower positions of the thick portion 47 near the hollow spherical segment-shaped pivot 33. The retainers 69, 69 are engaged with a yoke-like antirotation piece 68 protruded from the rear housing 19 as shown in Fig. 2. The stepped thin portion 48 is formed at the periphery of the thick portion 47, and rectangular openings 64, 64 are formed at the upper right and left sides. The supporting rod 53 is provided at the openings 64, 64, and the left opening 64 communicates with one of the openings 59. Rectangular openings 65 are so opened at right and left lower positions in plate 17 at an angle of 45° with the pivot 33 of the supporting means 30 as a center to engage the pawls 56 of the mirror holder 15. A surface 70 to be contacted with the end of a tool to be inserted when the mirror element 13 is separated from the subassembly 23 is formed near the lowermost side. Fig. 6 shows the other surface of the pivot plate 17, i.e., the surface facing the actuator unit 12, illustrating the sockets or spherical seats 22, 22 with slots for engaging the movable pivots 21 at the end of the adjusting nut 20 of the actuator side. These spherical seats 22, 22 are formed at positions perpendicular to each other with the hollow spherical segment-shaped pivot 33 as a center or vertex, and stoppers 72 are formed for restricting the angle of the mirror in contact with the rear housing 19 when adjusting the inclining angle of the mirror at a plurality of positions thereon.

The operation of the holding device of this embodiment will be described.

The mirror assembly 10 as shown in Fig. 1 is assembled as below. The hollow spherical segment-shaped pivot 33 of the pivot plate 17 is first engaged with the recess spherical surface 29 formed on the rear housing 19 of the actuator unit 12, and the moveable pivots at the ends of the actuator side adjusting nuts 20 are simultaneously engaged with the spherical seats 22. Then, the spherical segment-shaped cap 37 is engaged within the recess spherical surface 35 of the pivot 33, and clamped with the threaded cylinder 26 by the helical spring 40 and the tapping screw 42 with washer. The pivot plate 17 is mounted with a suitable torque by means of elastic strength of the spring 40 and the clamping force of the screw 42.

The subassembly 23 in which the pivot plate 17 is mounted at the actuator unit 12 as described above is fixed to the base plate 75 in the mirror body 11. When fixing, as has been described with respect to Fig. 3, screws (not shown) are inserted into the screw penetrating holes 49 opened at the actuator unit 12 and clamped. Thereafter, as shown in Fig. 7, the mirror element 13 is inclined and approached to the pivot plate 17. Subsequently, as designated by solid lines in Fig. 8, the right and left hooks 51 of the mirror body side are lightly engaged with the supporting rod 53 of the pivot plate 17, the mirror element 13 is rotated clockwise in Fig. 7, 8 about the supporting rod 53 as a center, and gradually completely latched to the supporting rod 53 by the hook 51 while increasing the engaging degree with the rod 53. The lower portion of the mirror element 13 is engaged as shown in Fig. 10 after the pawls 56 are approached to the rectangular openings 65 as shown in Fig. 9, the thick portion 47 of the pivot plate side is resultantly engaged with the aperture 16 of the mirror holder side, the thin portion 48 is simultaneously closely contacted with the flat surface at the periphery of the mirror holder 15, and the bent part of the lower portion of the pivot plate 17 is guided by the projections 63 of the mirror holder side to be correctly engaged.

Since the hook 51 has a circular-arc-shaped inner surface 73 to be contacted to approx. 1/3 of the circumference of the supporting rod 53 as shown in the enlarged view of Fig. 8, it is latched while rotating around the supporting rod 53 as a center. Even if the pawl 56 of the lower portion is removed at rotating time or at finishing time, its cock portion is not removed. Since the pawls 56 and the rectangular openings 65 have inclinations of 45° at the pivot 33 as a center, the pivot plate 17 or the mirror holder 15 can be under tension in a direction perpendicular to the lengthwise direction of the pawl until the openings pass the undercut when engaging the pawls 56, the pawls are completely engaged with the rectangular openings after passing the undercut to firmly mount the pawls in the openings.

After assembling as described above, when it is necessary to remove the mirror element 13, as shown in Fig. 11, a tool 78, such as a screwdriver, is inserted from the cutout 61 of the mirror holder 15 to the contacting surface 70 of the pivot plate 17, and the tool 78 is slightly raised to open the mirror element 13 and the lower portion of the pivot plate 17, thereby disengaging the pawls 56. Then, the mirror element 13 is rotated reversely to an arrow in Fig.s 7, 8 to remove the latch of the hook 51, and the mirror element 13 is separated.

## Claims

1. A holding device of a mirror element (13) for a rearview mirror (10), comprising:

    a mirror body (11) supported to a base;

    an actuator unit (12) fixed to said mirror body (11) and formed by engaging a front housing (18) with a rear housing (19);

    supporting means (30) formed at said actuator unit (12) for tiltably supporting the mirror element (13);

    a pivot plate (17) mounted by said supporting means (30) on said actuator unit (12);

    the mirror element (13) having a mirror plate (14) and a mirror holder (15);

    an aperture (16) being formed at the central portion of said mirror holder (15), the pivot plate (17) being separably mounted on said aperture central portion;

    characterized by hook type latch means (50) provided at said mirror holder (15) and at a rather marginal portion of said pivot plate (17); and

    pawl engaging means (55) utilizing undercut formed at said mirror holder (15) and at a portion of said pivot plate (17) off from said hook type latch means (50).

2. The holding device as claimed in claim 1, characterized in that said supporting means (30) includes a cylinder (25) having a height reaching from the inner wall of the front housing (18) of said actuator unit (12) to the inner wall of the rear housing (19), a threaded cylinder (26) protruding from the upper surface of said cylinder (25), a spherical segment-shaped socket (28) formed at the periphery of said threaded cylinder (26), a spherical segment-shaped pivot (33) formed at the pivot plate side to be engaged with said socket (28), a recess (35) formed at the center of said spherical segment-shaped pivot (33), a spherical segment-shaped cap (37) to be engaged with said recess (35), and a tapping screw (42) inserted through a helical spring (40) into the center of said threaded cylinder (26).

3. The holding device as claimed in claim 1 or 2, characterized in that said latch means (50) includes hooks (51) formed at the upper right and left sides of the aperture (16) on the back surface of said mirror holder (15), and supporting rods (53) formed at the upper right and left sides of said pivot plate (17) at positions to be engaged with the hooks (51).

4. The holding device as claimed in any of claims 1 to 3, characterized in that said pawl engaging means (55) includes a pair of pawl members (56) protruded at symmetrical positions inclined at 45° with respect to the center of said supporting means (30) at the lower positions of the aperture (16) on the back surface of said mirror holder (15), and a pair of rectangular openings (65) formed at the pivot plate (17) to be engaged with said pawl members (56).

5. The holding device as claimed in claim 3 or 4, characterized in that the aperture (16) in said mirror holder (15) is of substantially thick cross shape at the center of the mirror holder (15) which further includes a pair of projections (63) to be contacted with the lower peripheral edge of said pivot plate (17) when mounting the pivot plate (17) near said pawl members (56), and a longitudinal projecting strip (62) at one side of the aperture (16) of said mirror holder (15) for guiding the pivot plate (17) at mounting.

6. The holding device as claimed in any of claims 1 to 5, characterized in that said pivot plate includes a plurality of stoppers (72) for restricting the inclining angle of the mirror element (13) in contact with the front surface of the rear housing (19) of said actuator unit (12) at the back surface thereof.

7. The holding device as claimed in any of claims 1 to 6, characterized in that said mirror holder (15) is formed with a cutout (61) for inserting a separating tool (78) at the skirt (60) of the peripheral edge thereof and with a contacting surface (70) to be contacted with the end of said tool.

8. The holding device as claimed in any of claims 1 to 7, characterized in that said actuator unit (12) includes anti-rotation pieces (68) protruded at the upper and lower portions of said supporting means (30) to prevent the mirror element (13) from rotating in a plane perpendicular to the mirror element (13) when said unit (12) is driven, and retainers (69) at said pivot plate (17) for engaging said anti-rotation pieces (68).

**Revendications**

1. Dispositif de maintien pour un élément réflecteur (13) d'un rétroviseur (10), comprenant:

un corps de rétroviseur (11) monté sur un socle;

une unité d'actionnement (12) fixée audit corps de rétroviseur (11) et formée par l'assemblage d'un boîtier avant (18) et d'un boîtier arrière (19);

des moyens de support (30) formés sur ladite unité d'actionnement (12) pour supporter de façon inclinable l'élément réflecteur (13);

une plaque à pivot (17) montée par lesdits moyens de support (30) sur ladite unité d'actionnement (12);

l'élément réflecteur (13) comprenant une plaque réfléchissante (14) et un porte-miroir (15);

une ouverture (16) étant formée dans la partie centrale dudit porte-miroir (15), la plaque à pivot (17) étant montée de façon détachable sur ladite partie centrale munie de la ouverture;

caractérisé par des moyens de verrouillage (50) du type en crochet prévus sur ledit porte-miroir (15) et sur une partie quelque peu marginale de ladite plaque à pivot (17); et

par des moyens d'accouplement à encliquetage (55) utilisant une contre-dépouille formée sur ledit porte-miroir (15) et sur une partie de ladite plaque à pivot (17) à distance desdits moyens de verrouillage (50) du type en crochet.

2. Dispositif de maintien selon la revendication 1, caractérisé en ce que lesdits moyens de support (30) comprennent un cylindre (25) ayant une hauteur qui va de la paroi interne du boîtier avant (18) de ladite unité d'actionnement (12) à la paroi interne du boîtier arrière (19), un cylindre taraudé (26) faisant saillie sur la surface supérieure dudit cylindre (25), un logement (28) en forme de zone sphérique, qui est formé autour dudit cylindre taraudé (26), un pivot (33) en forme de zone sphérique, qui est formé du côté de la plaque à pivot et destiné à être emboîté dans ledit logement (28), une cavité (35) formée au centre dudit pivot (33) en forme de zone sphérique, une calotte en sphérique (37) destinée à être emboîtée dans ladite cavité (35) et une vis auto-taraudeuse (42) insérée à travers un ressort hélicoïdal (40) dans le centre dudit cylindre taraudé (26).

3. Dispositif de maintien selon la revendication 1 ou 2, caractérisé en ce que lesdits moyens de verrouillage (50) comprennent des crochets (51) formés sur les côtés supérieurs droit et gauche de l'ouverture (16) sur la surface postérieure dudit porte-miroir (15), et des tiges de support (53) formées sur les côtés supérieurs droit et gauche de ladite plaque à pivot (17) dans des positions où elles peuvent être saisies par les crochets (51).

4. Dispositif de maintien selon l'une quelconque des revendications 1 à 3, caractérisé en ce que lesdits moyens d'accouplement à encliquetage (55) comprennent une paire d'éléments d'encliquetage (56) faisant saillie dans des positions symétriques inclinées à 45° par rapport au centre desdits moyens de support (30), au bas de l'ouverture (16) sur la surface postérieure dudit porte-miroir (15), et une paire d'ouvertures rectangulaires (65) formées dans la plaque à pivot (17) de façon à être mises en prise avec lesdits éléments d'encliquetage (56).

5. Dispositif de maintien selon la revendication 3 ou 4, caractérisé en ce que l'ouverture (16) dans ledit porte-miroir (15) a une forme de croix très épaisse au centre du porte-miroir (15), lequel comporte en outre, à proximité desdits éléments d'encliquetage (56), une paire de saillies (63) destinées à entrer en contact avec le bord périphérique inférieur de ladite plaque à pivot (17) lors du montage de la plaque à pivot (17), ainsi qu'une bande longitudinale saillante (62) d'un côté de l'ouverture (16) dudit porte-miroir (15) pour guider la plaque à pivot (17) au montage.

6. Dispositif de maintien selon l'une quelconque des revendications 1 à 5, caractérisé en ce que ladite plaque à pivot comporte, sur sa surface arrière, plusieurs arrêts (72) pour limiter l'angle d'inclinaison de l'élément réflecteur (13) en prenant contact avec la surface avant du boîtier arrière (19) de ladite unité d'actionnement (12).

7. Dispositif de maintien selon l'une quelconque des revendications 1 à 6, caractérisé en ce qu'il est formé, dans le rebord (60) à la périphérie dudit porte-miroir (15), une découpure (61) pour l'insertion d'un outil de séparation (78) et une surface de contact (70) destinée à être mise en contact avec l'extrémité dudit outil.

8. Dispositif de maintien selon l'une quelconque des revendications 1 à 7, caractérisé en ce que ladite unité d'actionnement (12) comporte des pièces anti-rotation (68) en saillie sur les parties supérieure et inférieure desdits moyens de support (30) pour empêcher l'élément réflecteur (13) de tourner dans un plan perpendiculaire à l'élément réflecteur (13) lorsque ladite unité (12) est actionnée, et des logements (69) dans ladite plaque à pivot (17) pour entrer en prise avec lesdites pièces anti-rotation (68).

**Patentansprüche**

1. Haltevorrichtung eines Spiegelelements (13) für einen Rückblickspiegel (10), mit:
einem an einer Basis gehaltenen Spiegelkörper (11);
einer am Spiegelkörper (11) befestigten Verstelleinheit (12), die durch Koppelung eines Vordergehäuses (18) mit einem Rückgehäuse (19) gebildet ist;
einer an der Verstelleinheit (12) gebildeten Trägereinrichtung (30) zum in der Neigung verstellbaren Tragen des Spiegelelements (13);
einer durch die Trägereinrichtung (30) auf der Verstelleinheit (12) gehaltenen Schwenkplatte (17);
wobei das Spiegelelement (13) eine Spiegelplatte (14) und einen Spiegelhalter (15) umfaßt;
und wobei eine Öffnung (16) am zentralen Teil des Spiegelhalters (15) gebildet ist und die Schwenkplatte (17) lösbar am zentralen Teil der Öffnung montiert ist;
gekennzeichnet durch eine hakenartige Klinkeneinrichtung (50), die am Spiegelhalter (15) und an einem Randteil der Schwenkplatte (17) gebildet ist;
und Klauen-Eingreifeinrichtungen (55), die eine am Spiegelhalter (15) und an einem Teil der Schwenkplatte (17) der von den hakenartigen Klinkeneinrichtungen (50) entfernt liegt, gebildete Unterschneidung verwendet.

2. Haltevorrichtung nach Anspruch 1, dadurch gekennzeichnet, daß die Trägereinrichtung (30) einen Zylinder (25), dessen Höhe von der Innenwand des Vordergehäuses (18) der Verstelleinheit (12) bis zur Innenwand des Rückgehäuses (19) reicht, einen mit Gewinde versehenen Zylinder (26), der von der Oberseite jenes Zylinders (25) vorsteht, eine Kugelsegmentschale (28), die am Umfang des mit Gewinde versehenen Zylinders (26) gebildet ist, einen Kugelsegmentzapfen (33), der auf der Seite der Schwenkplatte gebildet ist und mit der Kugelsegmentschale (28) in Eingriff zu bringen ist, eine am Zentrum des Kugelsegmentzapfens (33) gebildete Ausnehmung (35), eine zum Eingriff in diese Ausnehmung (35) bringbare weitere Kugelsegmentschale (37) und eine durch eine Schraubenfeder (40) hindurch in das Zentrum des mit Gewinde versehenen Zylinders (26) eingesetzte Gewindeschraube (42) umfaßt.

3. Haltevorrichtung nach Anspruch 1 oder 2, dadurch gekennzeichnet, daß die Klinkeneinrichtung (50) oben rechts und links von der Öffnung (16) auf der Rückseite des Spiegelhalters (15) gebildete Haken (51) und oben rechts und links an der Schwenkplatte (17) an Stellen für einen Angriff der Haken (51) gebildete Trägerstangen (53) umfaßt.

4. Haltevorrichtung nach einem der Ansprüche 1 bis 3, dadurch gekennzeichnet, daß die Klauen-Koppeleinrichtung (55) zwei an symmetrischen Stellen in einer Neigung von 45° in Bezug zum Zentrum der Trägereinrichtung (30) vorstehende Klauenglieder (56) im unteren Bereich der Öffnung (16) an der Rückseite des Spiegelhalters (15) und zwei rechteckige Öffnungen (65) an der Schwenkplatte (17), die mit den Klauengliedern (56) in Eingriff zu bringen sind, umfaßt.

5. Haltevorrichtung nach Anspruch 3 oder 4, dadurch gekennzeichnet, daß die Öffnung (16) im Spiegelhalter (15) im wesentlichen die Form eines dicken Kreuzes im Zentrum des Spiegelhalters (15) hat, der weiterhin zwei nahe den Klauengliedern (56) angeordnete Vorsprünge (63), die beim Montieren der Schwenkplatte (17) mit dem unteren Umfangsrand der Schwenkplatte (17) in Berührung zu bringen sind, und einen langgestreckten vorspringenden Streifen (62) an einer Seite der Öffnung (16) des Spiegelhalters (15) zum Führen der Schwenkplatte (17) beim Montieren aufweist.

6. Haltevorrichtung nach einem der Ansprüche 1 bis 5, dadurch gekennzeichnet, daß die Schwenkplatte an ihrer Rückseite eine Mehrzahl von Stoppern (72) zur Begrenzung des Neigungswinkels des Spiegelelements (13) in Kontakt mit der Vorderfläche des Rückgehäuses (19) der Verstelleinheit (12) aufweist.

7. Haltevorrichtung nach einem der Ansprüche 1 bis 6, dadurch gekennzeichnet, daß der Spiegelhalter (15) mit einem Ausschnitt (61) zum Einsetzen eines Trennwerkzeugs (78) am Saum (60) seines Umfangsrands und mit einer mit dem Ende dieses Werkzeugs in Berührung zu bringenden Kontaktfläche (70) ausgebildet ist.

8. Haltevorrichtung nach einem der Ansprüche 1 bis 7, dadurch gekennzeichnet, daß die Verstelleinheit (12) an den oberen und unteren Teilen der Trägereinrichtung (30) vorstehende Anti-Dreh-Teile (68) zur Verhinderung einer Drehung des Spiegelelements (13) in einer Ebene senkrecht zum Spiegelelement (13), wenn die Verstelleinheit (12) angetrieben ist, sowie Gegenhalter (69) an der Schwenkplatte (17) zum Angriff der Anti-Dreh-Teile (68) aufweist.

FIG. 2

FIG. 1

# FIG. 3

# FIG. 4

EP 0 276 677 B1

# F I G. 5

# F I G. 6

# FIG. 7

# FIG. 8

# F I G. 9

# F I G. 10

# F I G. 11